# EUROPÄISCHE PATENTANMELDUNG

(11) **EP 2 042 679 A1**
(43) Veröffentlichungstag der Anmeldung: **01.04.2009**
(21) Anmeldenummer: 07019123.4
(22) Anmeldetag: 28.09.2007
(51) Int. Cl.: E06B 7/10, F24F 7/00, F24F 13/18

(54) **Wärmetauscher für eine Fensteröffnung eines Gebäudes**

(71) Anmelder: PAUL SCHERRER INSTITUT, 5232 Villigen PSI (CH)
(72) Erfinder: Joehri, Haimo, 4313 Möhlin (CH)
(74) Vertreter: Fischer, Michael

(57) **Zusammenfassung**

Um den Heizenergiebedarf für bestehende Gebäude mit geringem Aufwand zu reduzieren wird eine Vorrichtung (10) vorgeschlagen, welche derart ausgestaltet ist, dass ein erster Luftstrom (18) vom Innern (INNEN) des Gebäudes nach aussen (AUSSEN) und ein zweiter Luftstrom (19) von aussen (AUSSEN) ins Innere (INNEN) des Gebäudes erzeugbar ist. Die Vorrichtung ist zudem derart ausgestaltet, dass sie in eine Fensteröffnung eines Gebäudes einbaubar ist und dass Wärme zwischen dem ersten Luftstrom (18) und dem zweiten Luftstrom (19) austauschbar ist.

## Beschreibung

Die vorliegende Erfindung betrifft eine Vorrichtung zum Einbau in eine Fensteröffnung eines Gebäudes.

Bei neueren Gebäuden kann der Heizenergiebedarf durch kontrollierte Wohnraumlüftung nach dem Minergie Standard im Vergleich zu herkömmlicher Bauweise drastisch gesenkt werden. Solche Gebäude umfassen ein Lüftungssystem mit einem Wärmetauscher, welcher normalerweise im Keller des Gebäudes untergebracht ist. Eine solches Lüftungssystem lässt sich jedoch mit der bestehenden Technik und akzeptablem Aufwand nur bei Neubauten realisieren.

Der vorliegenden Erfindung liegt daher die Aufgabe zugrunde den Heizenergiebedarf für bestehende Gebäude mit geringem Aufwand zu reduzieren.

Diese Aufgabe wird durch die im Patentanspruch 1 angegebene Vorrichtung gelöst. Vorteilhafte Ausgestaltungen der Erfindung sind in weiteren Ansprüchen angegeben.

Die Vorrichtung ist derart ausgestaltet, dass ein erster Luftstrom vom Innern des Gebäudes aus dem Gebäude hinaus erzeugbar ist. Zudem ist ein zweiter Luftstrom von ausserhalb des Gebäudes ins Innere des Gebäudes hinein erzeugbar. Zwischen dem ersten Luftstrom und dem zweiten Luftstrom ist Wärme austauschbar. Die Vorrichtung ist derart ausgestaltet, dass sie in eine Fensteröffnung eines Gebäudes einbaubar ist.

Gemäss einer bevorzugten Ausführungsform ist die Vorrichtung als einbaubares Fenster ausgestaltet. Der Begriff Fenster im Sinne dieser Anmeldung umfasst den Begriff Einbaufenster. Dabei ist das Fenster vorzugsweise über den gesamten oder zumindest einen wesentlichen Teil der Fensteröffnung transparent. Vorzugsweise umfasst das Fenster einen Wärmetauscher, welcher innerhalb des Fensters, angeordnet ist. Ein solcher Wärmetauscher kann beispielsweise als Fensterscheibe, welche Teil einer Mehrfachverglasung eines Fensters ist, ausgeführt sein.

Gemäss einer weiteren bevorzugten Ausführungsform umfasst die Vorrichtung mehrere parallel angeordnete Schichten. Eine Schicht kann dabei beispielsweise eine Scheibe (z.B. Fensterscheibe) oder eine Folie sein. Der erste und zweite Luftstrom verläuft zumindest teilweise innerhalb je eines Zwischenraums, welcher zumindest teilweise durch eine der Schichten begrenzt ist. Vorzugsweise findet der Wärmetausch über eine, mehrere oder alle der Schichten statt. Beispielsweise strömt dabei innerhalb eines mehrschichtigen Fensters der erste Luftstrom entlang einer Wärme tauschenden Fensterscheibe, während der zweite aus der gegenüberliegenden Seite der Wärme tauschenden Fensterscheibe vorbeiströmt. Mit andern Worten, die Fensterscheibe dient als Wärmetauscher.

Vorzugsweise umfasst ein Material, aus welchem eine, mehrere oder alle der Schichten im Wesentlichen bestehen, Glas oder Kunststoff. vorzugsweise ist dieses Material transparent. Alternativ oder zusätzlich dazu ist dieses Material gut Wärme leitend. Vorzugsweise ist eine Schicht als Scheibe, Fensterscheibe oder als Folie ausgebildet.

Zur Verhinderung von Verschmutzung und oder Staubanlagerung umfasst eine, mehrere oder alle der der Schichten eine Staub und/oder Schmutz abweisende Oberfläche. Gemäss einer weiteren bevorzugten Ausführungsform umfasst eine, umfassen mehrere oder alle der Schichten ein Schmutz abweisendes und/oder Staub abweisendes Material. Gemäss einer weiteren bevorzugten Ausführungsform ist auf einer Schicht eine zusätzliche Staub abweisende Beschichtung aufgetragen. Eine solche Beschichtung und/oder ein Material, welches von der Schicht umfasst wird, kann beispielsweise mittels eines Einsatzes von Nanotechnologie hergestellt worden sein.

Gemäss einer weiteren bevorzugten Ausführungsform wird für den Wärmetausch eine gut Wärme leitende Schicht verwendet, beispielsweise eine Metallscheibe. Materialien, welche eine hohe Wärmeleitfähigkeit aufweisen, sind beispielsweise Materialien, welche eine hohe Volumendichte an freien Elektronen aufweisen, beispielsweise eben Metalle. Solche Materialien mit freien Elektronen weisen jedoch den Nachteil auf, dass sie Licht sehr stark absorbieren. Je nach Lichtbedarf eines Gebäudes oder einzelner Räumlichkeiten innerhalb des Gebäudes, oder auch einer hohen Anzahl von Fensteröffnungen, sind Fenster welche nicht transparent sind, dafür jedoch ein ausgesprochen effizientes Material für den Wärmetausch aufweisen, jedoch nicht störend. Nicht transparente Fenster oder Fenster welche nicht über die im Wesentlichen gesamte Fensterfläche transparent sind, stellen deshalb eine bevorzugte Ausführungsform der Erfindung dar.

Das Dilemma zwischen hoher Leitfähigkeit für den Wärmetauscher und Transparenz des Fensters wird gemäss einer weiteren bevorzugten Ausführungsform dadurch gelöst, dass ein nicht transparentes gut Wärme leitendes Material (beispielsweise ein Metall), welches durch einen Wärmetauscher umfasst wird, nur einen Teil der Gesamtfläche des Fensters bedeckt.

Das oben beschriebene Dilemma wird gemäss einer weiteren bevorzugten Ausführungsform dadurch gelöst, dass zumindest eine der Schichten ein transparentes Basismaterial umfasst, wobei zur Erhöhung des Wärmetauschs die zumindest eine der Schichten durchgehende Kanäle umfasst, wobei in den Kanälen ein ebenfalls durch die Schicht durchgehendes Wärmetransportmaterial angeordnet ist, welches eine höhere Wärmeleitfähigkeit aufweist als das Basismaterial der Schicht. Das Wärmetransportmaterial umfasst gemäss einer detaillierteren bevorzugten Ausführungsformen Metall, oder ein sonstiges nichttransparentes Material, oder ein Material, dessen Wärmeleitfähigkeit im Wesentlichen auf dem Vorhandensein eines Elektronengases beruht. Auf diese Weise kann (aber muss nicht) eine maximal grosse Fläche des Fensters transparent ausgestaltet werden. Es sei an dieser Stelle ausdrücklich erwähnt, dass für manche Anwendungen diese Verstärkung der Wärmeleitung Mittels eines gut Wärme leitenden Materials nicht notwendig ist. Je nach baulichen Verhältnissen und Lüftungsbedarf ist es ausreichend, wenn der Austausch von Wärme zwischen dem ersten und dem zweiten Luftstrom über ein transparentes Material stattfindet, beispielsweise über eine transparente Glas- oder Kunststoffscheibe, ohne dass ein die Scheibe durchdringendes Wärmetransportmaterial notwendig wäre.

Um den Austausch von Wärme durch eine Schicht, welche als Wärmetauscher fungiert, zu verbessern, weist die Schicht ein Profil auf, so dass sich eine Wärme tauschende Fläche ergibt, welche grösser ist als eine Wärme tauschende Fläche einer unprofilierten Scheibe. Vorzugsweise wird eine solche Schicht in dem Fenster derart angeordnet, dass der erste Luftstrom und/oder der zweite Luftstrom möglichst wirbelfrei und/oder möglichst nahe entlang der Scheibe strömen.

Gemäss einer weiteren bevorzugten Ausführungsform ist der erste Luftstrom und/oder der zweiter Luftstrom passiv, beispielsweise durch Konvektion, erzeugbar. Dadurch ergibt sich der Vorteil, dass keine Energie (Z.B. mittels Stromleitung oder Batterie) zu der Vorrichtung transportiert werden muss.

Gemäss einer weiteren bevorzugten Ausführungsform ist der erste Luftstrom und/oder der zweite Luftstrom regulierbar. Für passiv angetriebene Luftströme kann dies beispielsweise durch Lüftungsklappen und/oder Ventile ermöglicht werden.

Zumindest im Rahmen dieses Dokumentes umfasst der Begriff Regulierbarkeit das Regeln mittels einer Regelung und/oder das Steuern mittels einer Steuerung.

Gemäss einer weiteren bevorzugten Ausführungsform ist der erste Luftstrom und/oder der zweite Luftstrom aktiv erzeugbar. Dadurch sind die Luftströme auf einfache und komfortable Weise regulierbar.

Gemäss einer weiteren bevorzugten Ausführungsform verlaufen der erste Luftstrom und der zweite Luftstrom entlang eines Wärme tauschenden Materials in entgegen gesetzter Richtung zueinander. Dadurch wird ein besonders guter Wärmetausch, erzielt.

Gemäss einer weiteren bevorzugten Ausführungsform ist der Austausch von Wärme zwischen dem ersten Luftstrom und dem zweiten Luftstrom regulierbar.

Gemäss einer weiteren bevorzugten Ausführungsform ist die Vorrichtung derart ausgestaltet, dass sie vor Schall schützt.

Die Erfindung wird nachfolgend anhand der Figuren beispielsweise näher erläutert. Dabei zeigen:
- Figur 1: eine Vorrichtung welche als Fenster ausgebildet ist und welche in eine Fensteröffnung eines Gebäudes eingebaut ist gemäss einer bevorzugten Ausführungsform; und
- Figur 2: einen transparente Fensterscheibe zur Verwendung in einer bevorzugten Ausführungsform.

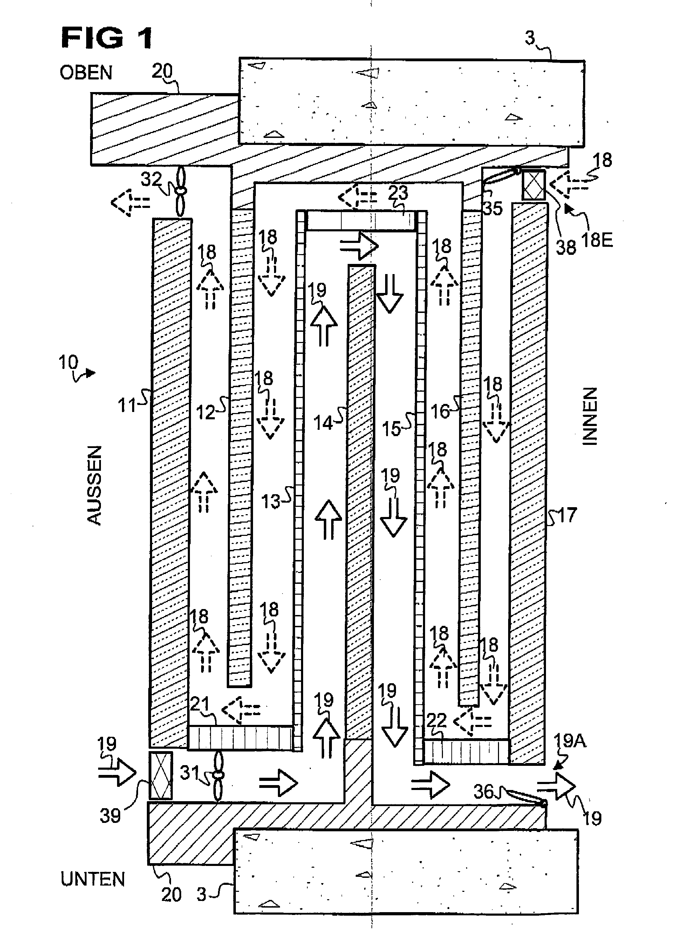

Figur 1 zeigt eine Vorrichtung welche als Fenster 10 ausgebildet ist und welche in eine Fensteröffnung eines Gebäudes eingebaut ist, gemäss einer bevorzugten Ausführungsform. Dabei zeigt Figur 1 einen vertikalen Schnitt durch das Fenster 10 hindurch, wobei das Verhältnis von Fensterdicke zu Fensterhöhe zur besseren Darstellbarkeit auf Papier sehr gross gewählt ist. Sichtbar vom Gebäude ist das Mauerwerk 3, in welches welches die Fensteröffnung eingelassen ist.

Das Fenster 10 umfasst einen Fensterrahmen 20, mehrere Scheiben 11, 12, 13, 14, 15, 16, 17, sowie weitere Bauteile 21, 22, 23. Der Fensterrahmen 20 zusammen mit den Scheiben 11, 12, 13, 14, 15, 16, 17 und den weiteren Bauteilen 21, 22, 23, sind derart angeordnet, dass sich eine erste Luftpassage 28 und eine zweite Luftpassage 29 durch das Fenster hindurch bilden. Die erste Luftpassage 28 dient zur Aufnahme eines ersten Luftstroms 18, welcher vom Gebäudeinnern (INNEN) nach aussen (AUSSEN) strömt, während die zweite Luftpassage 29 zur Aufnahme eines zweiten Luftstroms 19 dient, welcher von ausserhalb des Gebäudes in das Gebäudeinnere strömt. Der erste Luftstrom 18, insbesondere dessen Strömungsrichtung ist durch gestrichelte Pfeile dargestellt, während der zweite Luftstrom 19, insbesondere dessen Strömungsrichtung, durch ausgezogene Pfeile dargestellt ist.

Der erste Luftstrom 18 und der zweite Luftstrom 19 strömen entlang der Scheiben 13, 15, sowie entlang der Bauteile 21, 22, 23 auf gegenüberliegenden Seiten der Scheiben 13, 15 sowie Bauteile 21, 22, 23. Diese Scheiben 13, 15 und Bauteile 21, 22, 23 dienen daher als Wärmetauscher um Wärme zwischen dem ersten Luftstrom 18 und dem zweiten Luftstrom 19 auszutauschen.

Vorzugsweise sind sämtliche Scheiben 11, 12, 13, 14, 15, 16, 17 transparent. Beispielsweise können die Scheiben 11, 12, 13, 14, 15, 16, 17 vollständig aus Kunststoff oder Glas ausgeführt sein oder Kunststoff oder Glas umfassen. Vorzugsweise wird zudem für diejenigen Scheiben 13, 15 und Bauteile 21, 22, 23, welche als Wärmetauscher dienen, ein Material mit einer hohen Wärmeleitfähigkeit verwendet. Vorzugsweise weisen diejenigen Scheiben 13, 15 und die Bauteile 21, 22, 23 welche als Wärmetauscher dienen, eine möglichst geringe Dicke auf, damit Wärme möglichst effizient ausgetauscht wird (dazu kann die Dicke der Scheiben 13 und 15 beispielsweise geringer gewählt werden als eine oder alle Dicken der übrigen Scheiben 11, 12, 14, 16, 17.

Um den ersten Luftstrom 18 und den zweiten Luftstrom 19 zu regulieren und anzutreiben, kann in der ersten Luftpassage 28 und/oder in der zweiten Luftpassage 29 ein Ventilator 31, 32 angeordnet sein. Um den ersten Luftstrom 18 und den zweiten Luftstrom 19 zu regulieren, kann in der ersten Luftpassage 28 und/oder in der zweiten Luftpassage 29 eine regulierbare Klappe 35, 36 angeordnet sein. Der erste Luftstrom 18 und/oder der zweite Luftstrom 19 können jedoch auch durch Konvektion angetrieben werden. Dabei werden die Luftpassage 28 und/oder die Luftpassage 29 so angeordnet, dass das Prinzip, wonach warme Luft aufsteigt, ausgenützt wird.

Zur Verhinderung einer Ablagerung von Staub und Schmutz können bei den Eingängen des ersten Luftstromes und des zweiten Luftstromes Filter 38, 39 angeordnet sein. Aus dem selben Grund können die Oberflächen der Scheiben 11, 12, 13, 14, 15, 16, 17 geeignet beschichtet sein, beispielsweise unter Einsatz von Nanotechnologie.

Das Fenster 10 ist derart ausgeführt, dass innerhalb des Gebäudes der Einlass 18E des ersten Luftstroms 18 oberhalb des Auslasses 19A des zweiten Luftstroms19 angeordnet ist. Auf diese Weise kann das Risiko eines Luftstromkurzschlusses reduziert werden. Mit Luftstromkurzschluss wird dabei die Problematik angesprochen, dass die in das Gebäude strömende frische und aufgewärmte Luft des zweiten Luftstroms 19 gleich wieder über den ersten Luftstrom 18 aus dem Gebäude hinaus geblasen wird. Da die bei dem Auslass 19A in das Gebäude einströmende Luft höchstens so warm sein kann, wie die im Einlass 18E angesaugte Luft, kann so verhindert werden, dass die einströmende Luft zum Einlass 18E aufsteigt. Auf die gleiche Weise wird an der Aussenseite (AUSSEN) des Fensters verhindert, dass verbrauchte Luft wieder in das Gebäude hinein befördert wird.

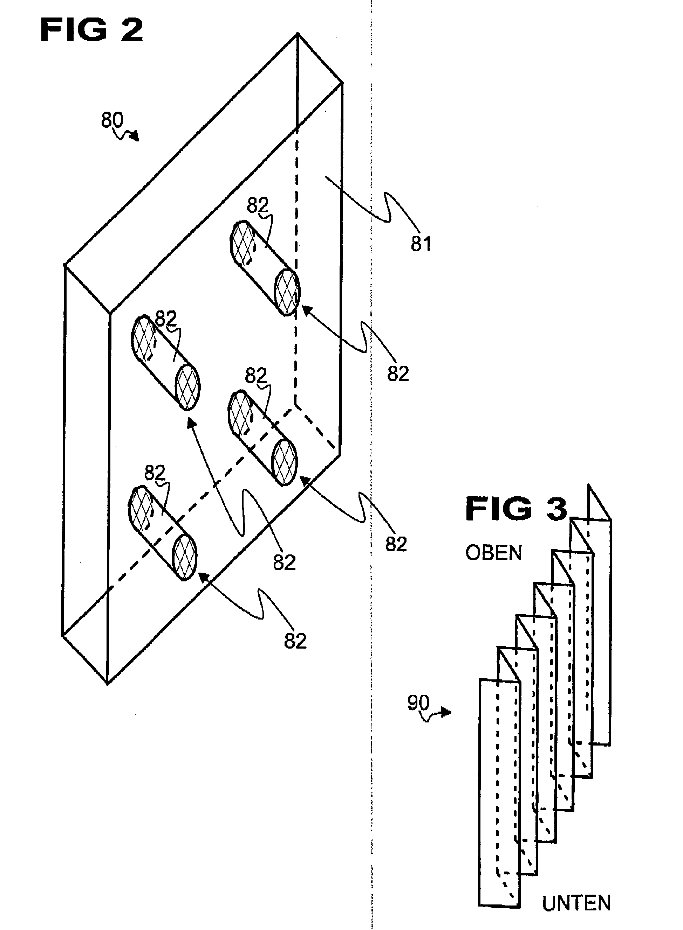

Figur 2 zeigt eine transparente Fensterscheibe 80, welche als Wärmetauscher in einer bevorzugten Ausführungsform der Erfindung eingesetzt werden kann. Die Fensterscheibe 80 besteht im Wesentlichen aus Glas, welches als transparentes Basismaterial 81 dient. Zur Erhöhung des Wärmetauschs umfasst die Fensterscheibe 80 durchgehende Kanäle 82, in welchen ein ebenfalls durch die Fensterscheibe hindurch gehendes metallisches Wärmetransportmaterial 84 angeordnet ist. Zur Erhöhung des Austauschs von Wärme zwischen dem ersten Luftstrom und dem zweiten Luftstrom, kann die Fensterscheibe 80 von Figur 2 beispielsweise als Wärme tauschende Scheibe 13, 15 in dem Fenster von Figur 1 eingesetzt werden.

Figur 3 zeigt eine transparente Fensterscheibe 90, welche gemäss einer bevorzugten Ausführungsform als Wärmetauscher der Vorrichtung eingesetzt wird. Zur Erhöhung des Wärmetauschs ist die Oberfläche der Fensterscheibe 90 vergrössert, indem die Fensterscheibe 90 ein Zickzackprofil aufweist. Vorzugsweise wird die Fensterscheibe 90 von Figur 3 als Wärme tauschende Scheibe 13, 15 in dem Fenster von Figur 1 eingesetzt, damit sich ein verbesserter Austausch von Wärme zwischen dem ersten und dem zweiten Luftstrom ergibt. Alternativ zu einem Zickzackprofil kann eine Fensterscheibe, mit dem Ziel den Wärmetausch zu erhöhen, auch ein anderes Profil aufweisen, welche die Oberfläche vergrössert, beispielsweise ein gewelltes Profil. Vorzugsweise wird die Fensterscheibe 90 in einem Einbaufenster 10 derart angeordnet, dass sich ein möglichst guter Strömungsverlauf ergibt, beispielsweise so, dass der erste Luftstrom und der zweite Luftstrom auf gegenüber liegenden Seiten der Fensterscheibe 90, entlang der Richtung der Vertiefungen strömt, welche durch das Zickzack-Profil oder durch ein Wellenprofil gebildet werden.

### Liste der verwendeten Bezugszeichen

- 10: Fenster, Vorrichtung
- 3: Mauerwerk
- 11, 12, 13, 14, 15, 16, 17: Scheibe, Fensterscheibe, Schicht
- 13, 15: Scheiben, welche als Wärmetauscher dienen
- 18: Erster Luftstrom
- 18E: Einlass des ersten Luftstroms
- 19: Zweiter Luftstrom
- 19A: Auslass des zweiten Luftstroms
- 20: Fensterrahmen
- 21, 22, 23: weitere Bauteile; Bauteile welche als Wärmetauscher dienen
- 28: Erste Luftpassage
- 29: Zweite Luftpassage
- 31, 32: Ventilator
- 35, 36: Klappe, Lüftungsklappe
- 38, 39: Filter
- 80: Fensterscheibe
- 82: Kanäle
- 84: Metallisches Wärmetransportmaterial
- 90: Fensterscheibe

## Patentansprüche

1. Vorrichtung (10), zur Reduktion des Heizenergiebedarfs für ein bestehendes Gebäude, wobei die Vorrichtung derart ausgestaltet ist, dass ein erster Luftstrom (18) vom Innern (INNEN) des Gebäudes nach aussen (AUSSEN) und ein zweiter Luftstrom (19) von aussen (AUSSEN) ins Innere (INNEN) des Gebäudes erzeugbar ist und Wärme zwischen dem ersten Luftstrom (18) und dem zweiten Luftstrom (19) austauschbar ist,
**dadurch gekennzeichnet, dass**
die Vorrichtung derart ausgestaltet ist, dass sie in eine Fensteröffnung eines Gebäudes einbaubar ist.

2. Vorrichtung (10) nach Anspruch 1,
**dadurch gekennzeichnet, dass**
die Vorrichtung als einbaubares Fenster (10) ausgestaltet ist.

3. Vorrichtung (10) nach Anspruch 2
**Gekennzeichnet durch**
einen Wärmetauscher (13, 15, 21, 22, 23), welcher innerhalb des Fensters angeordnet ist.

4. Vorrichtung (10) nach einem der vorhergehenden Ansprüche,
**gekennzeichnet durch**
mehrere parallel angeordnete Schichten (11, 12, 13, 14, 15, 16, 17), wobei der erste Luftstrom (18) und zweite Luftstrom (19) zumindest teilweise innerhalb je eines Zwischenraums verläuft, welcher zumindest teilweise **durch** eine der Schichten (11, 12, 13, 14, 15, 16, 17) begrenzt ist.

5. Vorrichtung (10) nach Anspruch 4,
**dadurch gekennzeichnet, dass**
zumindest eine der Schichten (80) als verbesserter transparenter Wärmetauscher ausgebildet ist, indem die Schicht (80) ein transparentes Basismaterial (81) umfasst, wobei zur Erhöhung des Wärmetauschs die Schicht durchgehende Kanäle (82) umfasst, in welchen ein ebenfalls durch die Schicht durchgehendes Wärmetransportmaterial (84) angeordnet ist, welches eine höhere Wärmeleitfähigkeit aufweist als das Basismaterial (81) der Schicht (80).

6. Vorrichtung (10) nach Anspruch 4,
**dadurch gekennzeichnet, dass**
zumindest eine der Schichten (90) als verbesserter Wärmetauscher ausgebildet ist, indem die Schicht (90) ein Profil aufweist, so dass sich eine Wärme tauschende Fläche ergibt, welche grösser ist als eine Wärme tauschende Fläche einer unprofilierten Scheibe.

7. Vorrichtung nach einem der vorhergehenden Ansprüche,
**dadurch gekennzeichnet, dass**
der erste Luftstrom (18) und/oder der zweite Luftstrom (19) passiv erzeugbar ist.

8. Vorrichtung nach einem der vorhergehenden Ansprüche,
**dadurch gekennzeichnet, dass**
der erste Luftstrom (18) und/oder der zweite Luftstrom (19) durch Konvektion erzeugbar ist.

9. Vorrichtung nach einem der vorhergehenden Ansprüche,
**dadurch gekennzeichnet, dass**
der erste Luftstrom (18) und/oder der zweite Luftstrom (19) aktiv erzeugbar ist.

10. Vorrichtung nach einem der vorhergehenden Ansprüche,
**dadurch gekennzeichnet, dass**
der erste Luftstrom (18) und/oder der zweite Luftstrom (19) regulierbar ist.

11. Vorrichtung nach einem der vorhergehenden Ansprüche,
**dadurch gekennzeichnet, dass**
der erste Luftstrom (18) zumindest über eine Teilstrecke parallel zu dem zweiten Luftstrom (19), jedoch in entgegen gesetzter Richtung geführt ist.

12. Vorrichtung nach einem der vorhergehenden Ansprüche,
**dadurch gekennzeichnet, dass**
der Austausch von Wärme zwischen dem ersten Luftstrom (18) und dem zweiten Luftstrom (19) regulierbar ist.

13. Vorrichtung nach einem der vorhergehenden Ansprüche,
**dadurch gekennzeichnet, dass**
der erste Luftstrom (18) und der zweite Luftstrom (19) derart angeordnet sind, dass ein Luftstromkurzschlusses vermieden wird.

14. Vorrichtung nach einem der vorhergehenden Ansprüche,
**dadurch gekennzeichnet, dass**
innerhalb des Gebäudes ein Einlass (18E) des ersten Luftstroms (18) oberhalb eines Auslasses (19A) des zweiten Luftstroms (19) angeordnet ist

15. Gebäude umfassend die Vorrichtung gemäss einem der vorhergehenden Ansprüche.
